# EUROPÄISCHE PATENTANMELDUNG

(11) **EP 1 685 949 A1**
(43) Veröffentlichungstag der Anmeldung: **02.08.2006**
(21) Anmeldenummer: 05112095.4
(22) Anmeldetag: 14.12.2005
(51) Int. Cl.: B29D 30/72

(54) **Verfahren zur Herstellung eines Luftreifens mit Reifenaufbauteilen**

(30) Priorität: 27.01.2005 DE 102005003856
(71) Anmelder: Continental Aktiengesellschaft, 30165 Hannover (DE)
(72) Erfinder: Winkler, Jens Dr., 30173 Hannover (DE); Seevers, Jörn Dr., 31303 Burgdorf (DE); Geffert, Ulrich, 31848 Bad Münder (DE)

(57) **Zusammenfassung**

Die Erfindung betrifft ein Verfahren zur Herstellung eines Luftreifens mit Reifenaufbauteilen.

Um ein Verfahren zur Herstellung eines Luftreifens mit Reifenaufbauteilen bereitzustellen, mit dem auf eine einfache Weise und mit einer hohen Prozessgeschwindigkeit der Aufbau der Reifenseitenwand erfolgt, wird folgendes Verfahren vorgeschlagen:
- Auflegen von Reifenaufbauteilen auf ein Aufbaumittel (1),
- Auflegen eines ersten wulstnahen Seitenwandteiles (5) auf eine seitlich zum Aufbaumittel (1) angeordnete Oberfläche (6),
- Hochklappen des ersten wulstnahen Seitenwandteiles (5) unter Bildung eines Reifenwulstes (8),
- Aufspulen eines zweiten laufstreifennahen Seitenwandteiles (11) in Form von Materialstreifen (12) zur Komplettierung der Reifenseitenwand (4) und
- Weiterverarbeitung des herzustellenden Luftreifens mit einem konventionellen Verfahren.

## Beschreibung

Die Erfindung betrifft ein Verfahren zur Herstellung eines Luftreifens mit Reifenaufbauteilen.

Die DE 198 31 747 A1 offenbart ein Verfahren zur Herstellung eines Reifens, insbesondere zur Herstellung eines Luftreifens für Kraftfahrzeuge. Bei diesem Verfahren wird insbesondere die Reifenseitenwand dadurch hergestellt, dass dieser Vorgang durch ein so genanntes Aufspulen von einzelnen Materialstreifen über den gesamten Umfang der Reifenseitenwand erfolgt. Ein Vorteil dieser Art des Herstellungsverfahrens besteht darin, dass die Bauteilherstellung endkonturnah ist. Des Weiteren entstehen keine Materialverschiebungen durch Anrollprozesse und die Reifenseitenwand besitzt keine Unstetigkeitsstellen, da sie sozusagen spleißlos ohne Überlappungen ausgeführt ist. Der entscheidende Nachteil besteht dahingegen darin, dass die Zugänglichkeit des Wulstbereiches für das Aufspulwerkzeug nur eingeschränkt möglich ist. Diese Einschränkung hat insbesondere eine langsame Prozessgeschwindigkeit zur Folge.

Der Erfindung lag die Aufgabe zugrunde ein Verfahren bereitzustellen, mit dem auf eine einfache Weise und mit einer hohen Prozessgeschwindigkeit der Aufbau der Reifenseitenwand erfolgt.

Gelöst wird die Aufgabe durch ein Verfahren zur Herstellung eines Luftreifens mit Reifenaufbauteilen, die zumindest eine Karkasse, einen Laufstreifen, einen Reifenwulst mit Wulstkernen sowie eine zweiteilige Reifenseitenwand umfassen, mit folgenden Schritten:
- Auflegen von Reifenaufbauteilen auf ein Aufbaumittel,
- Auflegen eines ersten wulstnahen Seitenwandteiles auf eine seitlich zum Aufbaumittel angeordnete Oberfläche,
- Hochklappen des ersten wulstnahen Seitenwandteiles unter Bildung eines Reifenwulstes,
- Aufspulen eines zweiten laufstreifennahen Seitenwandteiles in Form von Materialstreifen zur Komplettierung der Reifenseitenwand und
- Weiterverarbeitung des herzustellenden Luftreifens mit einem konventionellen Verfahren.

Ein Vorteil der Erfindung ist insbesondere darin zu sehen, dass durch das erfindungsgemäße Verfahren der Aufbau der Reifenseitenwand auf eine einfache Weise realisiert wird und gleichzeitig die Vorteile einer aufgespulten Reifenseitenwand erreicht werden. Das Aufspulen des laufstreifennahen Seitenwandteiles stellt sicher, dass die Bauteilherstellung im Schulterbereich der Reifenseitenwand endkonturnah erfolgt. Des Weiteren besitzt die Reifenseitenwand in diesem Bereich keine Materialverschiebungen durch Anrollprozesse und keine Unstetigkeitsstellen, da dieser Teil der Reifenseitenwand spleißlos ist. Gleichzeitig wird durch dieses Verfahren gewährleistet, dass die Zugänglichkeit für die Aufspulwerkzeuge für das zweite laufstreifennahe Seitenwandteil gegeben, wodurch insgesamt eine hohe Prozessgeschwindigkeit erreicht wird.

In einer vorteilhaften Weiterbildung der Erfindung ist vorgesehen, dass das erste wulstnahe Seitenwandteil in Form eines zusammenhängenden Materialstreifens auf die Oberfläche aufgelegt wird. Dieser Verfahrensschritt zeichnet sich durch eine hohe Prozessgeschwindigkeit aus.

In einer weiteren vorteilhaften Weiterbildung der Erfindung ist vorgesehen, dass das erste wulstnahe Seitenwandteil in Form von mehreren Materialstreifen auf die Oberfläche aufgespult wird. Das Aufspulen in Form von Materialstreifen bietet den Vorteil, dass dieses Seitenwandteil keinen Spleiß besitzt.

In einer weiteren vorteilhaften Weiterbildung der Erfindung ist vorgesehen, dass das Aufbaumittel als Außenkontur die Innenkontur des herzustellenden Reifens besitzt. Auf diese Weise wird der herzustellende Reifen endkonturnah gefertigt.

In einer weiteren vorteilhaften Weiterbildung der Erfindung ist vorgesehen, dass das erste wulstnahe Seitenwandteil im hochgeklappten Zustand im Wesentlichen auf der halben Querschnittshöhe des herzustellenden Reifens endet. Dadurch wird bei der Herstellung des Reifens eine hohe Prozessgeschwindigkeit erreicht.

Anhand eines Ausführungsbeispiels soll die Erfindung näher erläutert werden. Es zeigen:
- Fig. 1: eine erste Variante des Verfahrens, bei der das erste wulstnahe Seitenwandteil ein zusammenhängender Materialstreifen ist und
- Fig. 2: eine zweite Variante des Verfahrens, bei der das erste wulstnahe Seitenwandteil in Form von mehreren Materialstreifen aufgespult wird.

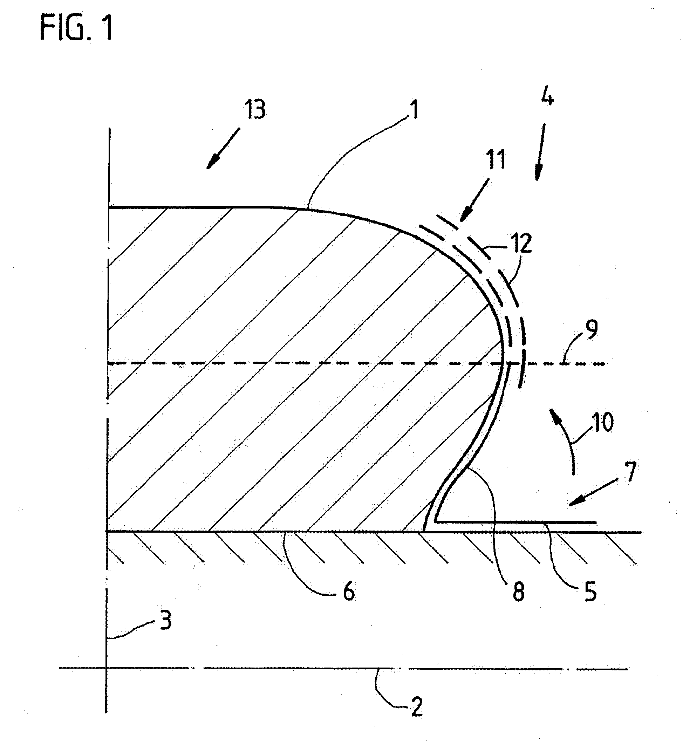

Figur 1 zeigt eine erste Variante des Verfahrens, bei der das erste wulstnahe Seitenwandteil 5 ein zusammenhängender Materialstreifen 7 ist. Zunächst werden auf dem Aufbaumittel 1 Reifenaufbauteile des Reifenunterbaues aufgebaut, insbesondere die Reifenkarkasse. Das Aufbaumittel 1 besitzt als Außenkontur die Innenkontur des herzustellenden Reifens. Bei der Figur handelt es sich um eine Radialschnittansicht, wobei die dargestellten Teile im Wesentlichen rotationssymmetrisch zur axialen Achse 2 sind. Die dargestellten Teile sind ebenfalls im Wesentlichen achsensymmetrisch zur radialen Achse 3.

Beim Aufbau der Reifenseitenwand 4 wird zunächst das wulstnahe Seitenwandteil 5 in Form eines zusammenhängenden Materialstreifens 7 auf die Oberfläche 6 aufgelegt und gespleißt. Anschließend erfolgt das Hochschlagen des wulstnahen Seitenwandteiles 5 unter Bildung des Reifenwulstes 8, wobei das wulstnahe Seitenwandteil 5 im Wesentlichen auf der halben Querschnittshöhe 9 des herzustellenden Reifens endet. Die Hochklappbewegung ist in der Figur mit dem Bezugszeichen 10 gekennzeichnet. Anschließend erfolgt das spiralförmige Aufspulen eines zweiten laufstreifennahen Seitenwandteiles 11 in Form von Materialstreifen 12 über den gesamten Umfang des herzustellenden Reifens, wodurch die Komplementierung der zweiteiligen Reifenseitenwand 4 erfolgt. Im darauffolgenden Verfahrensschritt erfolgt der Aufbau des Laufstreifens an der Position 13 und die Weiterverarbeitung nach einem konventionellen Verfahren. Die Reihenfolge des Aufbaues des wulstnahen Seitenwandteiles 5 und des laufstreifennahen Seitenwandteiles 11 wäre auch in umgekehrter Reihenfolge denkbar. Analog gilt das für die Reihenfolge des Auflegens des Laufstreifens und des Seitenwandteiles 11.

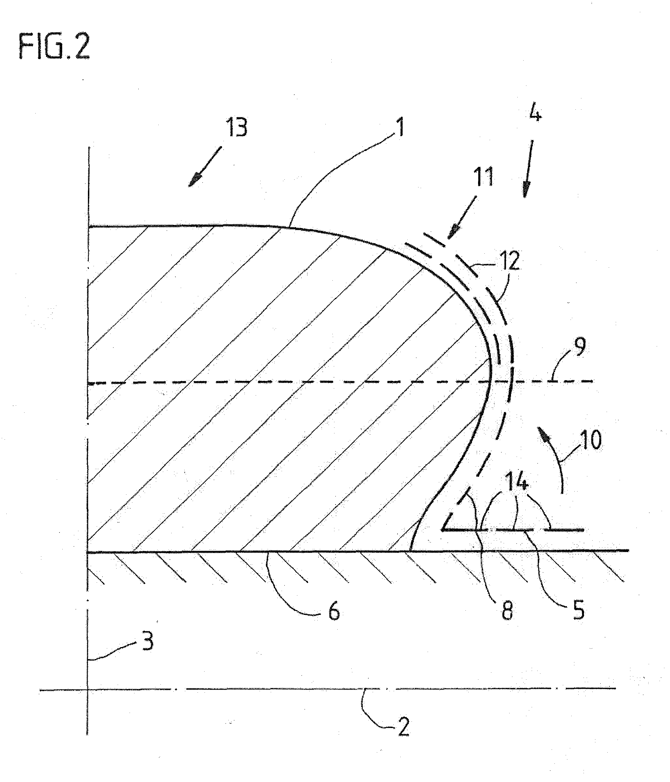

Die Figur 2 zeigt eine zweite Variante des Verfahrens, bei der das erste wulstnahe Seitenwandteil 5 in Form von mehreren Materialstreifen aufgespult wird. Bei dieser Variante besteht zur ersten Variante in der Figur 1 der wesentliche Unterschied darin, dass das wulstnahe Seitenwandteil 5 in Form von Materialstreifen 14 auf die Oberfläche 6 aufgespult wird. Anschließend wird das wulstnahe Seitenwandteil 5 in der Hochklapprichtung 10 unter Bildung des Reifenwulstes hochgeklappt. Die weiteren Verfahrensschritte erfolgen analog zu dem in der Figur 1 beschriebenen Verfahren. Die Oberfläche 6 ist in den Figuren 1 und 2 zylindrisch dargestellt. Sie kann jedoch ebenfalls konisch oder als Balg ausgeführt sein.

### Bezugszeichenliste

### (ist Teil der Beschreibung)

- 1: Aufbaumittel
- 2: Axiale Achse
- 3: Radiale Achse
- 4: Reifenseitenwand
- 5: Wulstnahes Seitenwandteil
- 6: Oberfläche
- 7: Zusammenhängender Materialstreifen
- 8: Reifenwulst
- 9: Halbe Querschnittshöhe des herzustellenden Reifens
- 10: Hochklapprichtung
- 11: Laufstreifennahes Seitenwandteil
- 12: Einzelne Materialstreifen
- 13: Laufstreifenposition
- 14: Einzelne Materialstreifen

## Patentansprüche

1. Verfahren zur Herstellung eines Luftreifens mit Reifenaufbauteilen, die zumindest eine Karkasse, einen Laufstreifen, einen Reifenwulst (8) mit Wulstkernen sowie eine zweiteilige Reifenseitenwand (5,11) umfassen, mit folgenden Schritten:
- Auflegen von Reifenaufbauteilen auf ein Aufbaumittel (1),
- Auflegen eines ersten wulstnahen Seitenwandteiles (5) auf eine seitlich zum Aufbaumittel (1) angeordnete Oberfläche (6),
- Hochklappen des ersten wulstnahen Seitenwandteiles (5) unter Bildung eines Reifenwulstes (8),
- Aufspulen eines zweiten laufstreifennahen Seitenwandteiles (11) in Form von Materialstreifen (12) zur Komplettierung der Reifenseitenwand (4) und
- Weiterverarbeitung des herzustellenden Luftreifens mit einem konventionellen Verfahren.

2. Verfahren nach Anspruch 1,
**dadurch gekennzeichnet, dass**
das erste wulstnahe Seitenwandteil (5) in Form eines zusammenhängenden Materialstreifens (7) auf die Oberfläche (6) aufgelegt wird.

3. Verfahren nach Anspruch 1 oder 2,
**dadurch gekennzeichnet, dass**
das erste wulstnahe Seitenwandteil (5) in Form von mehreren Materialstreifen (14) auf die Oberfläche (6) aufgespult wird.

4. Verfahren nach einem der Ansprüche 1 bis 3,
**dadurch gekennzeichnet, dass**
das Aufbaumittel (1) als Außenkontur die Innenkontur des herzustellenden Reifens besitzt.

5. Verfahren nach einem der Ansprüche 1 bis 4,
**dadurch gekennzeichnet, dass**
das erste wulstnahe Seitenwandteil (5) im hochgeklappten Zustand im Wesentlichen auf der halben Querschnittshöhe (9) des herzustellenden Reifens endet.

6. Fahrzeugreifen mit Reifenaufbauteilen, wobei der Fahrzeugreifen mit einem Verfahren nach Anspruch 1 hergestellt wird.
